(19) Europäisches Patentamt
European Patent Office
Office européen des brevets

(11) EP 1 253 988 B1

(12) EUROPÄISCHE PATENTSCHRIFT

(45) Veröffentlichungstag und Bekanntmachung des Hinweises auf die Patenterteilung:
02.07.2003 Patentblatt 2003/27

(51) Int Cl.⁷: **B23B 1/00**

(21) Anmeldenummer: 00991210.6

(22) Anmeldetag: 18.12.2000

(86) Internationale Anmeldenummer:
PCT/EP00/12913

(87) Internationale Veröffentlichungsnummer:
WO 01/043902 (21.06.2001 Gazette 2001/25)

(54) **VERFAHREN ZUR DRALLFREIEN SPANENDEN BEARBEITUNG VON ROTATIONSSYMMETRISCHEN FLÄCHEN**

METHOD FOR SCROLL-FREE MACHINING ROTATIONALLY SYMMETRICAL SURFACES

PROCEDE D'USINAGE PAR ENLEVEMENT DE COPEAUX SANS VRILLE DE SURFACES A SYMETRIE DE ROTATION

(84) Benannte Vertragsstaaten:
AT DE ES FR GB IT

(30) Priorität: 17.12.1999 DE 19961111
30.12.1999 DE 19963897

(43) Veröffentlichungstag der Anmeldung:
06.11.2002 Patentblatt 2002/45

(73) Patentinhaber: BOEHRINGER WERKZEUGMASCHINEN GmbH
D-73033 Göppingen (DE)

(72) Erfinder:
• SCHREIBER, Leo
73529 Schwäbisch Gmünd (DE)
• TROTT, Klaus
97638 Mellrichstadt (DE)

(74) Vertreter: Alber, Norbert, Dipl.-Ing. et al
Patentanwalt
Albert-Rosshaupter-Strasse 65
81369 München (DE)

(56) Entgegenhaltungen:
US-A- 2 553 966        US-A- 3 616 715

• PATENT ABSTRACTS OF JAPAN vol. 009, no. 229 (M-413), 14. September 1985 (1985-09-14) & JP 60 085801 A (EGURO TEKKOSHO), 15. Mai 1985 (1985-05-15)

## Beschreibung

### I. Anwendungsgebiet

Die Erfindung betrifft die spanende Bearbeitung von sich drehenden, insbesondere zentrischen rotationssymmetrischen Flächen, eines metallischen Werkstücks, insbesondere aus Stahl oder aus Grauguß, auch in gehärtetem Zustand mittels geometrisch bestimmter Schneide bzw. Schneiden.

### II. Technischer Hintergrund

Die Drehbearbeitung von rotationssymmetrischen Teilen sowohl im weichen als auch im gehärteten Zustand mit geometrisch bestimmter Schneide ist Stand der Technik. Teilweise werden dabei die Verfahren Schleifen, Finishen, Honen und ähnliche Verfahren substituiert.

Schneidstoffe, die eine ausreichende Lebensdauer, auch für die Bearbeitung gehärteter Werkstücke, bieten, stehen inzwischen in unterschiedlichen Ausführungsformen zur Verfügung.

Eine Bearbeitung nach dem Härten ist in der Regel notwendig, auch wenn die Vorbearbeitung mit hoher Präzision erfolgt, da nach dem Härteprozeß in der Regel zum Teil erhebliche Härteverzüge auftreten. Ein Prozeß, der die Maß-Genauigkeit des Werkstückes wieder herstellt, ist somit unerläßlich.

Längsdrehen erzeugt stets eine Oberfläche, die drallbehaftet ist, und zwar gleichgültig, welches Material bearbeitet wird bzw. ob dieses gehärtet oder ungehärtet ist.

Diese Oberfläche weist regelmäßige Strukturen auf (Riefen oder gratförmige Erhebungen), die einer Gewindestruktur (Drall) entsprechen und durch den Vorschub des Werkzeuges entlang dem rotierenden Werkstück eine Steigung erzeugen.

Dies gilt gleichermaßen für zylindrische, kegelige oder anders geformte Werkstückoberflächen. Es liegen also beispielsweise Formen eines Gewindes oder Teilstücke hiervon auf der zu erzielenden Oberfläche des Werkstückes vor.

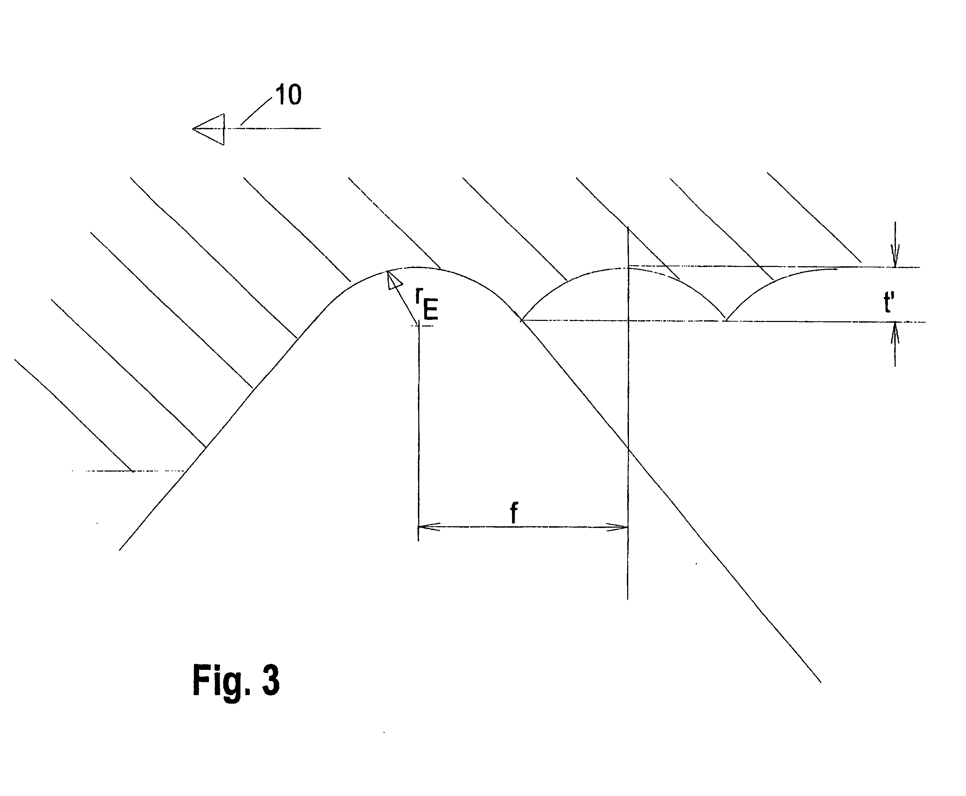

Der formelmäßige Zusammenhang, der die Gewindetiefe bzw. Rauheit der gewindeartigen Struktur beschreibt, ist in Fig. 3 erläutert.

Da die Zerspanungsdaten, insbesondere bei gehärteten Werkstücken für hohe Oberflächengüten, in der Regel sehr klein sind, kommt es häufig zu einem relativ langsamen Bearbeitungsfortschritt bzw. einer geringen Zerspanungsleistung.

Während die relativ geringe Zerspanungsleistung einen deutlichen wirtschaftlichen Nachteil bedeutet, bereiten die drallbehafteten Oberflächen Probleme bei hierauf anliegenden Dichtungen, insbesondere, wenn sie sich relativ zu der Oberfläche bewegen, zum Beispiel eine drehende Welle innerhalb einer stehenden Dichtung. Dichtungen in diesem Sinne können etwa die bekannten Radialwellendichtringe sein.

Eine derart drallbehaftete Oberfläche fördert mittels der gewindeförmigen Riefen bzw. Grate entlang der Oberfläche Kühlmittel, Schmiermittel, etc. an der anliegenden Dichtung vorbei, von der einen zur anderen Seite in Axialrichtung, so daß die Dichtwirkung der Dichtung erheblich reduziert wird. Insbesondere bei Maschinen, die z.B. aus hygienischen oder auch aus Umweltschutzgründen ohne Leckage laufen müssen, stellt dies ein ernstzunehmendes Problem dar.

Zusätzlich werden die an der drallbehafteten Oberfläche anliegenden Dichtungselemente an den Berührungslinien oder -flächen durch diese gewindeförmigen Riefen oder Erhebungen vielfach mit der Zeit beschädigt, oder zumindest stark abrasiv beansprucht. Durch diese Abnutzung oder Beschädigung wird ebenfalls oft nach kurzer Zeit die Dichtwirkung erheblich herabgesetzt oder aufgehoben.

Betrachtet man die zur Verfügung stehenden spanenden Bearbeitungsverfahren am rotierenden Werkstück unter Betrachtung dieser beiden Problemstellungen, so ergibt sich folgendes Bild:

Versucht man beim Drehen von rotationssymmetrischen Flächen die gewindeförmige Ausbildung dadurch zu vermeiden, daß das Werkzeug bezüglich des Werkstückes nur radial (Einstechdrehen) bewegt wird, so entsteht wegen der fehlenden Axialbewegung eine drallfreie Oberfläche. Wenn jedoch die Einstechschneide in axialer Richtung so breit ist wie die insgesamt herzustellende rotationssymmetrische Fläche, treten, besonders bei der Bearbeitung von gehärteten Oberflächen, sehr hohe Schnittkräfte auf und wegen der dynamischen Instabilität ist die Neigung zum Rattern hoch. Diese dynamischen Instabilitäten bzw. das Rattern führen fast schlagartig zu so starken Oberflächenunregelmäßigkeiten, daß hier die Oberfläche ebenfalls zur einwandfreien Abdichtung zu unregelmäßig ist.

Bewegt man den Einstechstahl zusätzlich bei breiteren herzustellenden Flächen längs, d.h. in axialer Richtung, wird wieder naturgemäß eine drallbehaftete Oberfläche erzeugt.

Es ist daher Stand der Technik und notwendig, daß der erzeugte Drall, insbesondere die gewindeförmigen Drehriefen mit aufwendigen nachfolgenden Zusatzverfahren ausreichend abgeschwächt oder ganz beseitigt werden müssen, um eine einwandfreie Dichtwirkung zu gewährleisten.

Eine Möglichkeit, den Drall der Oberfläche (Drehriefen) zu vermeiden, könnte das Drehräumverfahren sein, wobei das Räumwerkzeug in tangentialer Richtung am rotierenden Werkzeug vorbeibewegt wird. Sind die einzelnen Schneiden des Drehräumwerkzeuges parallel der Rotationsachse des Werkzeuges ausgerichtet, so entsteht hierbei wieder die Problematik der hohen auf die Schneide wirkenden Kräfte und damit der Hang zu dynamischen Instabilität und der Neigung zum Rattern.

Bei einer Schrägstellung der Schneide beim Drehräumen, was zur Verminderung des Druckes auf die Schneide führt, entsteht jedoch eine gewindeförmige Reststruktur, da die Eingriffspunkte der Schneide am Werkstück unterschiedliche Abstände (Radien) von der Rotationsachse des Werkstückes aufweisen.

Beim Drehräumen mittels eines scheibenförmigen Werkzeuges mit den Schneiden auf dem Werkzeug-Umfang kommt beim Schrägstellen der in sich geraden Schneide noch das Problem hinzu, daß dann eine ballig-konvexe statt einer exakt zylindrischen Fläche am Werkstück erzeugt wird.

Weiterhin wird vielfach als zusätzliches Verfahren das Schleifen der Oberflächen angewendet. Dies bedeutet, daß das Werkstück in der Regel auf einen anderen Maschinentyp umzulagern ist. Die Stückkosten des Werkstückes werden daher durch die Verlängerung der Prozeßkette, d.h. durch den Einsatz einer weiteren Maschine, erheblich belastet und das wirtschaftliche Ergebnis somit deutlich verschlechtert. Weiterhin soll bei der Endbearbeitung der Werkstücke nach Möglichkeit auf das Schleifen verzichtet werden, da dieses in der Regel als Naßverfahren geschieht und somit weitere Umwelt- und Entsorgungsproblematiken über den Schleifschlamm entstehen und nach heutigem Stand das wirtschaftliche Ergebnis weiter belasten.

Hinzu kommt, daß selbst beim Schleifen Drallstrukturen erzeugt werden, die zunächst durch den Abrichtvorgang auf die Schleifscheibe aufgebracht werden und sich schließlich auf dem Werkstück abbilden. Auch beim Finishen, bei dem ein Schleifband oder ein Schleifelement an das Werkstück angelegt wird, entstehen wegen der zusätzlichen Oszillation bzw. Längsbewegung des Finishwerkzeuges relativ zum Werkstück drallbehaftete Oberflächenstrukturen

### III. Darstellung der Erfindung

#### a) Technische Aufgabe

Es ist daher die Aufgabe gemäß der Erfindung, ein Verfahren zur spanenden Bearbeitung von sich drehenden rotationssymmetrischen Werkstücken mit bestimmter Schneide zu schaffen, bei dem die entstehende rotationsymmetrische Oberfläche entweder keinen bzw. einen hinsichtlich Transportwirkung und abrasiver Wirkung nur unerheblichen Drall aufweist oder/und bei Bearbeitung der gehärteten Werkstückoberflächen eine besonders hohe Zerspanungsleistung erzielbar ist.

#### b) Lösung der Aufgabe

Diese Aufgabe wird durch die Merkmale des Anspruchs 1 oder 2 gelöst. Vorteilhafte Ausführungsformen ergeben sich aus den Unteransprüchen.

Erfindungsgemäß hat sich herausgestellt, daß das Auftreten und/oder Ausmaß der Gewindeform der entstehenden Oberflächenstruktur durch die Größe der Vorschubgeschwindigkeit der Schneiden in Relation zur vorhandenen Schrägstellung der Schneide zur Rotationsachse des Werkstückes, dem vorgegebenen Durchmesser und der Drehzahl des zu bearbeitenden Werkstückes so beeinflußt werden kann, daß kein bzw. ein in der Praxis nicht mehr relevanter Drall der bearbeiteten Oberfläche auftritt.

Ein weiterer Vorteil besteht darin, daß diese spezifische erfindungsgemäße Art der Räumbearbeitung sehr viel schneller und mit geringerem Aufwand durchzuführen ist als beispielsweise eine Schleif-, Finish- oder Honbearbeitung (oder vergleichbares Verfahren) zur Beseitigung der Draltstruktur der Oberfläche.

So kann das erfindungsgemäße Drehräumverfahren auf einer normalen Drehmaschine ebenso durchgeführt werden, wie auf einer Drehräummaschine mit beispielsweise scheibenförmigem Werkzeuggrundkörper, sofern die für das erfindungsgemäße Verfahren benutzte Schneide linear und quer, insbesondere lotrecht, zur Rotationsrichtung des Werkstückes, insbesondere in tangentialer Richtung an der zu bearbeitenden rotationssymmetrischen Fläche des Werkstückes vorbeibewegt werden kann.

Sofern - je nach Verwendung des Werkstückes - die Drallminimierung bzw. Drallfreiheit der zu erzeugenden Oberflächen nicht im Vordergrund steht, können die Bearbeitungsparameter so verändert werden, daß die erzeugte Oberfläche zwar drallbehaftet ist, die Zerspanungsleistung jedoch erheblich gesteigert werden kann, was insbesondere bei der Bearbeitung gehärteter Werkstücke von Bedeutung ist. Damit entsteht unter anderem ein sehr wirtschaftliches Verfahren mit hohen Oberflächengüten.

#### c) Ausführungsbeispiele

Eine Ausführungsform gemäß der Erfindung ist im folgenden anhand der Figuren beispielhaft näher beschrieben. Es zeigen:

Fig. 1: Eine perspektivische Darstellung der Bearbeitungssituation,

Fig. 2: Eine Darstellung der Situation der Fig. 1 quer zur Rotationsrichtung 10 und zur Vorschubbewegung 3, und

Fig. 3: eine Darstellung der Situation beim Längsdrehen.

Zunächst ist in Fig. 3 dargestellt, wie sich z. B. beim Längsdrehen durch den in Rotationsrichtung des Werkstückes bewegenden Schneidstahl und dessen Schneidenrundung $r_E$ eine gewindeartige Oberfläche ergibt:

Bei gleichbleibendem Vorschub f, ausgedrückt in mm/Umdrehung des Werkstückes, entsteht eine helixförmige Riefe 5, deren Windungs-Abstand in Richtung der Rotationsachse 10 bei gleichbleibendem Vorschub f konstant ist. Die Tiefe t' dieser Riefen hängt dabei ersichtlich von der Größe des Eckenradius $r_E$ der erzeugenden Schneide ab: Je größer dieser Eckenradius $r_E$ ist, um so flacher fallen die Flanken der Riefe aus und damit wird die Tiefe t' um so geringer. Der formelmäßige Zusammenhang lautet:

$$t = \frac{f^2}{8 \cdot r_E}$$

In der Einstellung wenigstens einer der Kanten der Schneide, insbesondere der Nebenschneide, die zur Schneidenecke hinführen, in möglichst geringem Winkel, vorzugsweise parallel, zur Richtung der Rotationsachse 10, liegt dabei in der Regel die einzige gangbare Möglichkeit, um die Tiefe t' zu minimieren, da der Vorschub f aufgrund vorgegebener Taktzeiten etc. in der Produktion nicht beliebig reduziert werden kann.

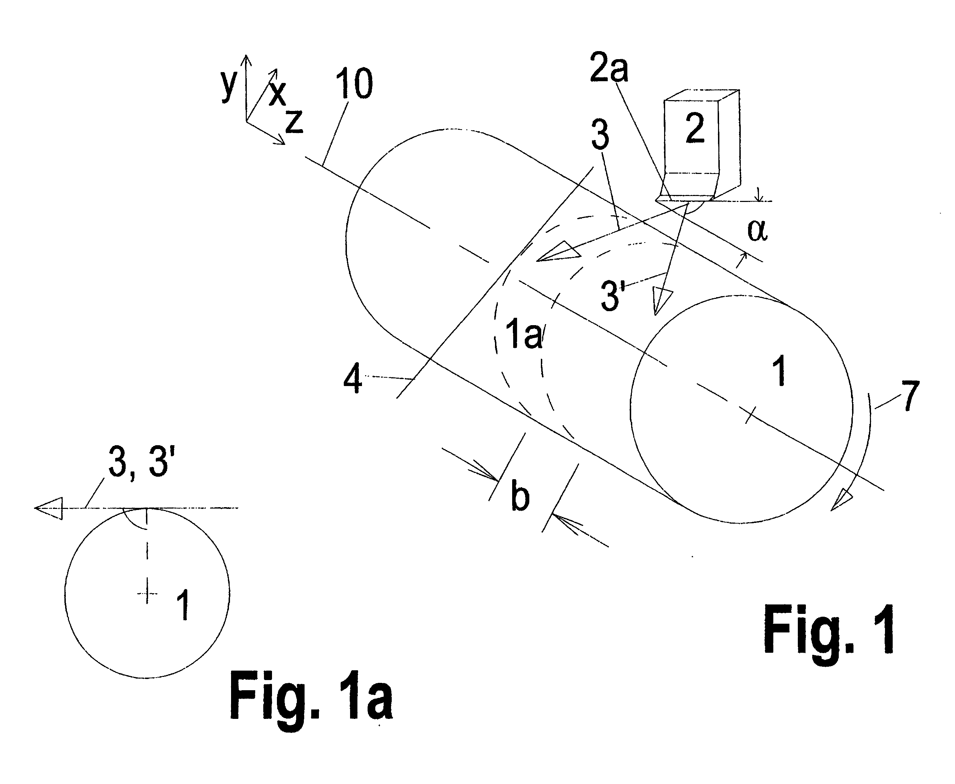

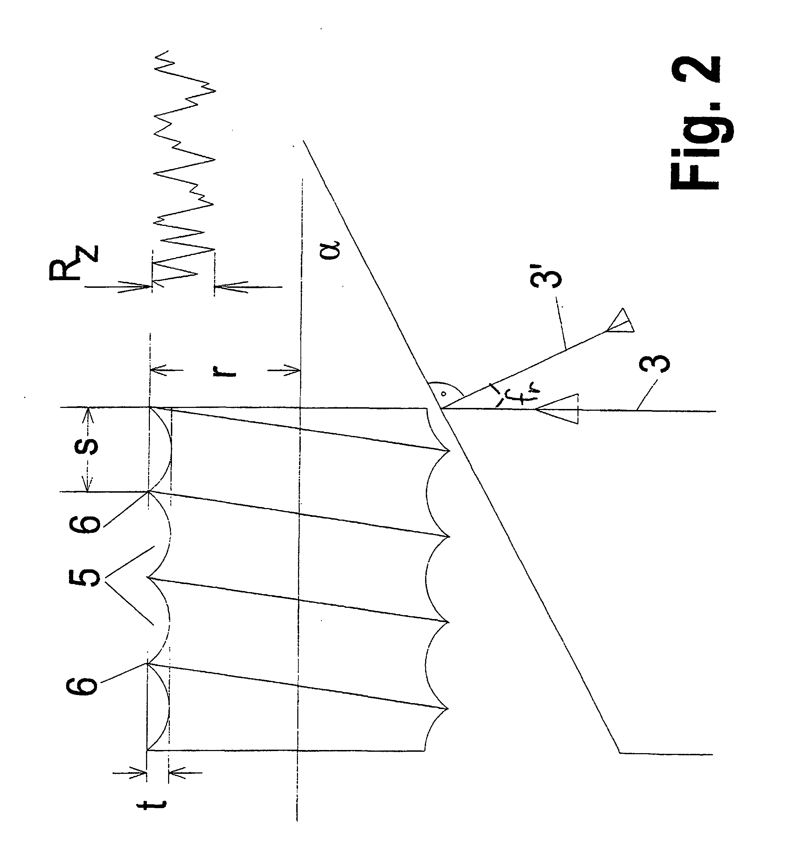

Demgegenüber zeigen die Figuren 1 und 2 die erfindungsgemäße Situation: Wie Fig. 1 zeigt, rotiert das Werkstück 1, an dem sich die zu bearbeitende rotationssymmetrische Fläche 1a befindet, um die Rotationsrichtung 10, bei Drehmaschinen oder Drehräummaschinen üblicherweise als Z-Richtung bezeichnet, auf denen die X- und Y-Richtung üblicherweise jeweils lotrecht stehen.

Die zu bearbeitende rotationssymmetrische Fläche 1a besitzt in Z-Richtung 10 eine Breite b, und soll in der Regel als Anlagefläche für einen Radialwellendichtring oder vergleichbares Element bei der späteren Anwendung dienen.

Das Werkzeug 2 wird mit seiner schräg zur Z-Richtung stehenden Schneide 2a in einer Vorschubrichtung 3, die parallel zu einer der Tangentenflächen an der rotationssymmetrischen Fläche 1a ist, so quer zur Richtung der Rotationsachse 10 am Werkstück entlang geführt, dass die einzelnen Schneidenbereiche nacheinander mit in Z-Richtung unterschiedlichen Bereichen der rotationssymmetrischen Fläche 1a in Berührung kommen, wobei die Erstreckung der Schneide 2a in Richtung der Rotationsachse, also in Rotationsrichtung 10, gleich oder größer der Breite b der zu bearbeitenden Fläche a ist. Die Vorschubrichtung 3 des Werkzeuges kann dabei in einer Ebene liegen, die lotrecht zur Rotationsrichtung 10 des Werkstückes ist, also in einer Radialebene des Werkstückes, oder in einer schräg zur Rotationsrichtung 10 liegenden Ebene (Vorschubrichtung 3').

Betrachtet in Rotationsrichtung 10 des Werkstückes stellt (siehe Fig. 1a) die Vorschubrichtung 3 bzw. 3' jedoch immer eine Tangente an den Soll-Durchmesser der zu bearbeitenden rotationssymmetrischen Fläche dar.

Das Werkstück 1 rotiert während der Bearbeitung in einer Drehrichtung 7 so, dass im Kontaktbereich zwischen Schneide 2a und zu bearbeitender Fläche 1a die Oberfläche des Werkstückes 1 gegen die Schneide 2a läuft.

Die Aufsicht in Y-Richtung der Fig. 2 zeigt den Schrägstellungswinkel α gegenüber der Rotationsrichtung 10 des Werkstückes 1 und die in der Aufsicht im rechten Winkel zu dieser Rotationsrichtung verlaufende Vorschubbewegung 3 der Schneide 2a.

Auf Grund der vom rechten zum linken Eck der Schneide 2a der Fig. 2 bei der Bearbeitung ablaufenden Schälbewegung ergibt sich die gewindeartige Oberfächenstruktur gemäß Fig. 2. Diese Oberfächenstruktur wird gebildet durch eine gewindeartige Riefe 5, deren einzelne Windungen unmittelbar in Längsrichtung des Werkstückes aneinander angrenzen, und zwischen sich einen Gewindegrat 6 bilden.

Die Riefen 5 sind gegenüber der Realität stark übertrieben dargestellt. Die Tiefe der Riefe 5 wird als Dralltiefe t bezeichnet, während der in Rotationsrichtung 10 gemessene Abstand zwischen zwei Windungen des Grates 6 bzw. der Riefen 5 als Drallsteigung s bezeichnet wird.

Die Schneide 2a kann auch entlang einer Vorschubbewegung 3', die quer zur Rotationsachse 10 und insbesondere lotrecht auf der Schneide 2a steht, bezüglich des Werkstückes 1 bewegt werden, wobei dann eine etwas geringere Breite der Schneide 2a erforderlich ist.

Die Drallsteigung s hängt von dem Räumvorschub $f_r$, der den Fortschritt in Vorschubbewegung 3, gemessen in Millimetern pro Umdrehung des Werkstückes angibt, und von dem Schrägstellungswinkel α wie folgt ab:

$$S = \frac{f_r}{\tan\alpha}$$

Die Dralltiefe t hängt vom bis zu den Tälern zwischen den Graten 6 gemessenen Radius (Kemdurchmesser) des Werkstückes an der zu bearbeitenden Fläche 1a und dem Räumvorschub f wie folgt ab:

$$t = -r + \sqrt{r^2 + \frac{f_r^2}{4}}$$

Auf Grund der Darstellung der Fig. 2 wird klar, dass bei Erreichen einer Dralltiefe t = 0 oder wenigstens t < 1 µm, insbesondere t < 0,4 µm, insbesondere t < 0,2 µm die Größe der Drallsteigung s keine Rolle mehr spielt.

In erster Linie wird daher beabsichtigt, den Räumvorschub $f_r$ so niedrig wie möglich zu halten, insbesondere so niedrig, daß die Dralltiefe t wesentlich kleiner, insbesondere mindestens um den Faktor 3, besser um den Faktor 5, kleiner, als die Rauhtiefe $R_z$ der so erzeugten Oberfläche wird. Die Rauhtiefe $R_z$ liegt üblicherweise im Bereich zwischen 1,5 µm und 6 µm.

BEZUGSZEICHENLISTE

| | |
|---|---|
| 1 | Werkstück |
| 1a | rotationssymmetrische Fläche |
| 2 | Werkzeug |
| 2a | Schneide |
| 3, 3' | Vorschubbewegung |
| 4 | Tangente |
| 5 | Riefe |
| 6 | Grat |
| 7 | Drehrichtung |
| 8 | Arbeitslinie |
| 10 | Z-Richtung, Rotationsachse |
| 11 | X-Richtung |
| 12 | Y-Richtung |
| f | Vorschub |
| $f_r$ | Räumvorschub |
| $\alpha$ | Schrägstellungswinkel |
| r | Werstückradius |
| s | Drallsteigung |
| t | Dralltiefe |
| b | Breite der Fläche 1 a |
| $R_z$ | Rauhtiefe |

**Patentansprüche**

1. Verfahren zum spanenden Bearbeiten von rotationssymmetrischen Flächen (1a) bei rotierendem Werkstück (1),
**dadurch gekennzeichnet, dass**
eine bezüglich der Rotationsachse (10) des Werkstückes (1) windschiefe Schneide (2a) in einer linearen Vorschubbewegung (3, 3'), quer zur Rotationsachse (10), am rotierenden Werkstück (1) kontaktierend entlang geführt wird, wobei die Bearbeitungsparameter, insbesondere der Räumvorschub ($f_r$), und die Schrägstellung ($\alpha$) der Schneide, so gewählt werden, dass der an der bearbeiteten Fläche (1a) auftretende Drall hinsichtlich Drallsteigung (s) und/oder Dralltiefe (t) minimal wird, insbesondere die Dralltiefe (t) minimal wird.

2. Verfahren zum spanenden Bearbeiten von rotationssymmetrischen Flächen (1a) bei rotierendem Werkstück (1),
**dadurch gekennzeichnet, dass**
eine bezüglich der Rotationsachse (10) des Werkstückes (1) windschiefe Schneide (2a) in einer linearen Vorschubbewegung (3, 3'), quer zur Rotationsachse (10), am rotierenden Werkstück (1) kontaktierend entlang geführt wird, wobei die Bearbeitungsparameter, insbesondere der Räumvorschub (f), bei der Bearbeitung einer gehärteten rotationssymmetrischen Fläche (1a) so gewählt werden, dass die sich ergebende Zerspanungsleistung maximal wird.

3. Verfahren nach Anspruch 1 oder 2,
**dadurch gekennzeichnet, dass**
die lineare Vorschubbewegung (3, 3') in einer Tangentialebene der rotationssymmetrischen Fläche (1a) erfolgt.

4. Verfahren nach einem der vorhergehenden Ansprüche,
**dadurch gekennzeichnet, dass**
die Schneide (2a) eine in sich gerade Schneide (2a) ist.

5. Verfahren nach einem der vorhergehenden Ansprüche,
**dadurch gekennzeichnet, dass**
die Schrägstellung der Schneide (2a) gegenüber der Rotationsachse (10) zwischen 0° und 90°, insbesondere zwischen 20° und 50°, beträgt.

6. Verfahren nach einem der vorhergehenden Ansprüche,
**dadurch gekennzeichnet, dass**
der Räumvorschub ($f_r$) relativ zur Schrägstellung ($\alpha$) der Schneide, dem Durchmesser der zu bearbeitenden rotationssymmetrischen Fläche (1a) so gewählt wird, dass die auf der Oberfläche des Werkstückes durch die Bearbeitung entstehenden Riefen (5) hinsichtlich Drallsteigung (s) und Dralltiefe (t) keinen bzw. einen vemachlässigbar geringen Gewindeeffekt aufweisen.

**Claims**

1. A process for cutting machining of rotationally symmetrical surfaces (1a) with a rotating workpiece (1), **characterised in that** a cutting edge (2a) which is askew with respect to the axis of rotation (10) of the workpiece (1) is guided in contacting relationship along the rotating workpiece (1) in a linear feed movement (3, 3') transversely with respect to the axis of rotation (10), wherein the machining parameters, in particular the broaching feed ($f_r$) and the inclined positioning ($\alpha$) of the cutting edge are so selected that the twist occurring at the machined surface (1a) becomes a minimum in respect of twist pitch (s) and/or twist depth (t) and in particular the twist depth (t) becomes a minimum.

2. A process for cutting machining of rotationally symmetrical surfaces (1a) with a rotating workpiece (1), **characterised in that** a cutting edge (2a) which is askew with respect to the axis of rotation (10) of the workpiece (1) is guided in contacting relationship along the rotating workpiece (1) in a linear feed movement (3, 3') transversely with respect to the axis of rotation (10), wherein the machining parameters, in particular the broaching feed (f), when machining a hardened rotationally symmetrical surface (1a), are so selected that the resulting material removal rate becomes a maximum.

3. A process according to claim 1 or claim 2 **characterised in that** the linear feed movement (3, 3') takes place in a tangential plane of the rotationally symmetrical surface (1a).

4. A process according to one of the preceding claims **characterised in that** the cutting edge (2a) is a cutting edge (2a) which is straight in itself.

5. A process according to one of the preceding claims **characterised in that** the inclined positioning of the cutting edge (2a) with respect to the axis of rotation (10) is between 0° and 90°, in particular between 20° and 50°.

6. A process according to one of the preceding claims **characterised in that** the broaching feed ($f_r$) relative to the inclined positioning ($\alpha$) of the cutting edge, and the diameter of the rotationally symmetrical surface (1a) to be machined, is so selected that the grooves (5) produced on the surface of the workpiece by the machining operation, in terms of twist pitch (s) and twist depth (t), have no screwthread effect or a negligibly slight screwthread effect.

## Revendications

1. Procédé d'usinage par enlèvement des copeaux, des surfaces symétriques de rotation (1a) à une pièce tournante (1), **caractérisé en ce qu'**, un tranchant (2a) oblique par rapport à l'axe de rotation (10) de la pièce (1) sera mis en contact au long de la pièce tournante (1) par un mouvement d'avance linéaire (3, 3'), transversale par rapport à l'axe de rotation (10), dont les paramètres d'usinage, spécialement l'avance de brochage (fr) et la position oblique ($\alpha$) du tranchant seront telles choisies que la déformation apparue sur la surface usinée (1a) soit de minime valeur, tant en ce qui concerne le pas (s) aussi bien que l'hauteur (t) de la déformation et spécialement l'hauteur (t) doit être de minime valeur.

2. Procédé d'usinage par enlèvement des copeaux, des surfaces symétriques de rotation (1a) à une pièce tournante (1), **caractérisé en ce qu'**, un tranchant (2a) oblique par rapport à l'axe de rotation (10) de la pièce (1) sera mis en contact au long de la pièce tournante (1) par un mouvement d'avance linéaire (3, 3'), transversale par rapport à l'axe de rotation (10), dont les paramètres d'usinage, spécialement l'avance de brochage (fr) à l'usinage d'une surface symétrique de rotation (1a), trempée, sera telle choisie que le rendement de l'enlèvement des copeaux, résulté soit au maximum.

3. Procédé, selon la revendication 1 ou 2, **caractérisé en ce que**, le mouvement d'avance linéaire (3, 3') a lieu dans un plan tangent à la surface symétrique de rotation (1a).

4. Procédé, selon l'une des revendications antérieures, **caractérisé en ce que**, le tranchant (2a) est un tranchant droit (2a).

5. Procédé, selon l'une des revendications antérieures, **caractérisé en ce que**, la position oblique du tranchant (2a) par rapport à l'axe de rotation (10) est entre 0° et 90°, spécialement entre 20° et 50°.

6. Procédé, selon l'une des revendications antérieures, **caractérisé en ce que**, l'avance de brochage (fr) relativement à la position oblique ($\alpha$) du tranchant, sera choisie en fonction du diamètre de la surface symétrique de rotation à usiner (1a), de sorte que les cannelures (5) apparues sur la surface de la pièce par usinage, en ce qui regarde le pas (s) et l'hauteur (t) de la déformation, ne produisent aucun effet de filet ou l'effet de filet produit soit de minime valeur.

Fig. 1a

Fig. 1

EP 1 253 988 B1

Fig. 2

EP 1 253 988 B1

Fig. 3